# EUROPÄISCHE PATENTSCHRIFT

(11) **EP 2 760 704 B1**
(45) Veröffentlichungstag und Bekanntmachung des Hinweises auf die Patenterteilung: **01.03.2017**
(21) Anmeldenummer: 12762217.3
(22) Anmeldetag: 14.09.2012
(51) Int. Cl.: B60R 11/02

(54) **LAUTSPRECHERSYSTEM FÜR EIN KRAFTFAHRZEUG**
LOUDSPEAKER SYSTEM FOR A VEHICLE
SYSTÈME HAUTPARLEUR POUR UN VÉHICULE

(30) Priorität: 29.09.2011 DE 102011115278
(43) Veröffentlichungstag der Anmeldung: 06.08.2014
(73) Patentinhaber: Audi AG, 85045 Ingolstadt (DE)
(72) Erfinder: SULOWSKI, Adam, 85057 Ingolstadt (DE); STASINSKI, Peter, 85049 Ingolstadt (DE); ROBL, Peter, 85290 Geisenfeld (DE)
(74) Vertreter: Schuster, Simon
(86) Internationale Anmeldenummer: PCT/EP2012/003862
(87) Internationale Veröffentlichungsnummer: WO 2013/045036

(56) Entgegenhaltungen:
- EP-A1- 0 534 084
- WO-A1-2008/055253
- WO-A1-2009/058441
- GB-A- 2 273 847
- US-A1- 2004 100 123

## Beschreibung

Die Erfindung betrifft ein Lautsprechersystem für ein Kraftfahrzeug nach der im Oberbegriff von Anspruch 1 näher definierten Art. Des Weiteren betrifft die Erfindung ein Kraftfahrzeug mit einem derartigen Lautsprechersystem.

Aus dem allgemeinen Stand der Technik sind Lautsprechersysteme für Kraftfahrzeuge in den unterschiedlichsten Ausführungsformen bekannt. Dabei hat der als elektromechanischer Wandler wirkende Lautsprecher die primäre Aufgabe, die in denselben eingeleitete elektrische Energie in Luftschall umzuwandeln. Durch die bewegten Massen des Lautsprechers werden zusätzlich zu dem Luftschall jedoch auch Körperschallanteile erzeugt, die über den direkten Kontakt zu einer Struktur, in welcher der Lautsprecher aufgenommen ist, beispielsweise einem Türinnenblech, in dieselbe eingeleitet werden. Dies führt häufig zu Aufschwingungen dieser Struktur, wodurch störende Nebengeräusche in dem Kraftfahrzeug generiert werden.

Dadurch, dass der Lautsprecher meist in Richtung der größten Nachgiebigkeit der Struktur verbaut wird, wird die durch den Körperschall erzeugte Kraft direkt in die Struktur eingeleitet, was die Aufschwingungen noch verstärkt. Des Weiteren werden auch zu der Struktur benachbarte Bauteile, wie beispielsweise Türinnenverkleidungen, zum Schwingen angeregt, was zusätzlich zu störenden Vibrationen und unerwünschten Nebengeräuschen führen kann. Ein weiteres Problem besteht darin, dass durch die oben beschriebenen Effekte auch der Schallpegel des primären Luftschalls des Lautsprechers verringert wird, wodurch dieser mit einer höheren Leistung betrieben werden muss, um denselben Schallpegel zu erreichen.

Ein gattungsgemäßes Lautsprechersystem ist aus der WO 2008/055253 A1 bekannt. Dabei verläuft die Längsachse des Lautsprechers parallel zu der Struktur, in der derselbe angeordnet ist.

In der GB 2 273 847 A1 ist ein Lautsprecher beschrieben, an den sich eine gekrümmte Wandung anschließt, die den von dem Lautsprecher erzeugten Schall umlenkt.

Die US 2004/0100123 A1 beschreibt einen Lautsprecher in einem Fahrzeug, dessen Längsachse gegenüber der Oberfläche, an der er montiert ist, einen Winkel von 45° aufweisen kann.

Aus der DE 81 10 984 U1 ist eine Vorrichtung zur gleichzeitigen Aufnahme eines Lautsprechers und einer Bremsleuchte bekannt. Der Lautsprecher und die Bremsleuchte sind in einem gemeinsamen Gehäuse untergebracht, welches über einen Fuß mit der Karosserie verbunden ist.

Es ist daher Aufgabe der vorliegenden Erfindung, ein Lautsprechersystem für ein Kraftfahrzeug zu schaffen, bei dem ein geringerer Anteil von Körperschall in die umgebende Struktur eingeleitet wird.

Erfindungsgemäß wird diese Aufgabe durch die in Anspruch 1 genannten Merkmale gelöst.

Erfindungsgemäß verläuft die Längsachse des Lautsprechers also nicht wie üblich senkrecht zu der größten Struktursteifigkeit bzw. in Richtung der größten Nachgiebigkeit der Struktur, sondern in einem Winkel zwischen 0 und 45° dazu, so dass der durch den Lautsprecher erzeugte Körperschall in Richtung einer geringeren Nachgiebigkeit der Aufnahmestruktur wirkt. Dadurch wird die Aufnahmestruktur in einem erheblich geringeren Maße zum Schwingen angeregt als dies bei üblichen Lautsprechersystemen der Fall ist. Letztendlich lassen sich auf diese Weise die durch den Lautsprecher verursachten Nebengeräusche erheblich reduzieren, was zu einer klareren und besseren Wiedergabe durch das erfindungsgemäße Lautsprechersystem führt.

Des Weiteren ist gemäß der Erfindung vorgesehen, dass der wenigstens eine Lautsprecher in ein schalenartiges, unmittelbar mit der Struktur verbundenes, gekrümmtes Strukturteil eingebaut ist, das in Richtung einer Türverkleidung geöffnet ist. Durch ein derart ausgebildetes Strukturteil wird der durch den Lautsprecher erzeugte Luftschall definiert in den Innenraum des Kraftfahrzeugs eingeleitet, was die mit dem Lautsprechersystem erreichbare Schallausbeute weiter verbessert. Ein weiterer Vorteil dieser Lösung besteht darin, dass der Lautsprecher in diesem Fall als offener Lautsprecher ausgeführt werden kann und keine geschlossenen oder ventilierten Lautsprecher erforderlich sind. Durch die offene Bauweise des Lautsprechers lassen sich gegenüber einer geschlossenen Bauweise Kosten einsparen. Erfindungsgemäß ist außerdem vorgesehen, dass zwei schalenartige, mit der Struktur verbundene, gekrümmte Strukturteile vorgesehen sind, zwischen denen der wenigstens eine Lautsprecher angeordnet ist. Dabei kann durch das zweite Strukturteil ein größeres Volumen an den Lautsprecher angekoppelt werden, das beispielsweise in einer Tür, in der der Lautsprecher eingebaut sein kann, zur Verfügung steht. Des Weiteren wird durch die beiden Strukturteile die Vorderseite der Membran des Lautsprechers von der Rückseite desselben getrennt, so dass ein akustischer Kurzschluss verhindert wird. Außerdem kann durch die beiden Strukturteile eine Trennung zwischen dem Nass- und dem Trockenraum realisiert werden, beispielweise wenn das Lautsprechersystem in einer Tür des Kraftfahrzeugs verbaut wird. Ein weiterer Vorteil dieser Lösung besteht darin, dass eine direkte Durchschallung von dem Fahrzeugaußenraum in den Fahrzeuginnenraum verhindert wird.

Um eine besonders geringe Weiterleitung des Körperschalls in die den Lautsprecher umgebende Struktur zu erreichen, kann des Weiteren vorgesehen sein, dass die Längsachse des wenigstens einen Lautsprechers im Wesentlichen parallel zu der Ebene verläuft, in der sich die Struktur erstreckt. Dadurch wird der von dem Lautsprecher erzeugte Körperschall in Richtung der größten Steifigkeit der Struktur eingeleitet, wodurch die Schwingung der Membran des Lautsprechers in der Richtung der kleinsten Nachgiebigkeit der Struktur erfolgt und demnach nur eine äußerst geringe Verformung der Struktur bewirken kann.

Eine weitere Verringerung des erzeugten Körperschalls lässt sich erreichen, wenn der wenigstens eine Lautsprecher an einer Position in der Struktur eingebaut ist, an welcher die Struktur eine hohe Steifigkeit aufweist.

Ein Kraftfahrzeug mit einem erfindungsgemäßen Lautsprechersystem ist in Anspruch 6 angegeben.

Weitere vorteilhafte Ausgestaltungen und Weiterbildungen der Erfindung ergeben sich aus den restlichen Unteransprüchen. Nachfolgend ist ein Ausführungsbeispiel der Erfindung anhand der Zeichnung prinzipmäßig dargestellt.

Es zeigt:
- Fig. 1: eine schematische Draufsicht auf ein nicht zu der Erfindung gehörendes Lautsprechersystem;
- Fig. 2: einen Schnitt nach der Linie II-II aus Fig. 1;
- Fig. 3: ein erfindungsgemäßes Lautsprechersystem; und
- Fig. 4: einen Schnitt nach Linie IV-IV aus Fig. 1.

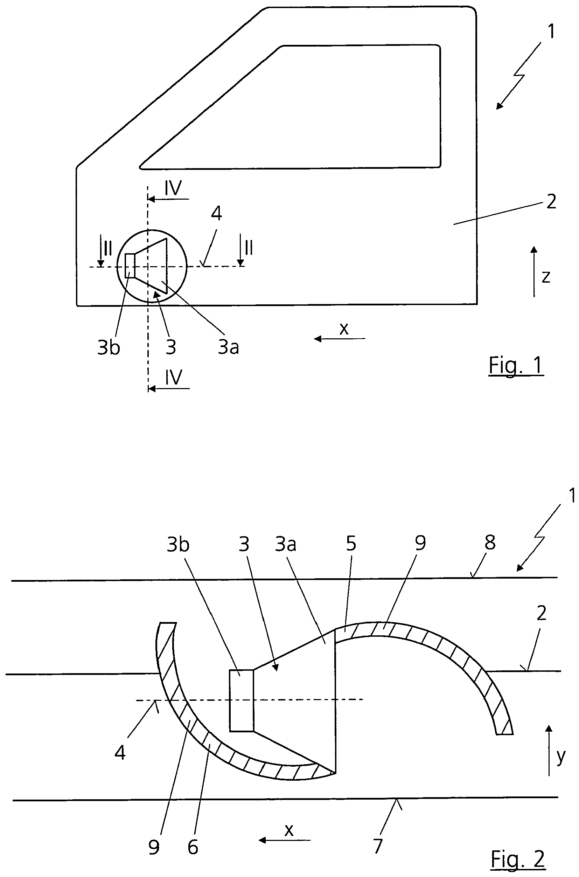

Fig. 1 zeigt eine sehr schematische Draufsicht auf eine Tür 1 eines in seiner Gesamtheit nicht dargestellten Kraftfahrzeugs, wobei eine üblicherweise an der Innenseite der Tür 1 angebrachte Türverkleidung in Fig. 1 nicht vorhanden ist. Die Tür 1 weist eine als Zwischenblech ausgeführte Struktur 2 auf, an welcher ein Lautsprecher 3 angebracht ist. Der Lautsprecher 3 weist in an sich bekannter Weise eine Membran 3a und einen Magneten 3b auf. Die weiteren Bauteile des Lautsprechers 3 sind im vorliegenden Fall nicht mit einem Bezugszeichen versehen, da sie für die Erfindung nicht von Bedeutung sind. Das nachfolgend beschriebene Lautsprechersystem ist beispielhaft stets mit lediglich einem Lautsprecher 3 dargestellt, es könnte jedoch auch mehrere Lautsprecher 3 aufweisen.

Die Struktur 2 verläuft in einer im Wesentlichen vertikalen Ebene, die in dem Kraftfahrzeug als xz-Ebene bezeichnet wird. Die Flächennormale der Ebene, in welcher sich die Struktur 2 erstreckt, ist demnach die in Fahrzeugquerrichtung verlaufende y-Richtung. Aus der Darstellung von Fig. 1 ergibt sich, dass die mit dem Bezugszeichen 4 bezeichnete Längsachse des Lautsprechers 3 im Wesentlichen parallel zu der Ebene verläuft, in der sich die Struktur 2 erstreckt. Die Längsachse 4 ist dabei diejenige Achse, die sich in Längsrichtung durch den Magneten 3b des Lautsprechers 3 erstreckt. Allgemein verläuft die Längsachse 4 des Lautsprechers 3 unter einem Winkel zwischen 0 und 45° zu der Ebene, in der sich die Struktur 2 erstreckt. Durch diese Anordnung des Lautsprechers 3 können die von dem Lautsprecher 3 neben dem eigentlichen Luftschall erzeugten Körperschallanteile, die sich insbesondere in Richtung der Längsachse 4 des Lautsprechers 3 ausbreiten, die Struktur 2 nur in geringem Maße verformen, da die Struktur 2 in der Richtung, in der der Körperschall auf dieselbe wirkt, eine hohe Steifigkeit aufweist. Dadurch werden erheblich weniger störende Geräusche erzeugt als bei bekannten Lautsprechersystemen. Des Weiteren ist in Fig. 1 erkennbar, dass der Lautsprecher 3 an einer Position innerhalb der Struktur 2 eingebaut ist, an welcher dieselbe eine hohe Steifigkeit aufweist, im vorliegenden Fall nämlich im Bereich der vorderen, unteren Ecke der Struktur 2.

In dem Schnitt gemäß Fig. 2 ist erkennbar, dass der Lautsprecher 3 in ein schalenartiges, mit der Struktur 2 verbundenes, gekrümmtes Strukturteil 5 eingebaut ist. Im dargestellten Ausführungsbeispiel sind zwei schalenartige, gekrümmte Strukturteile 5 und 6 vorgesehen, zwischen denen der Lautsprecher 3 angeordnet ist. Hierbei ist das in Fahrtrichtung x hintere Strukturteil 5 in Richtung einer Türverkleidung 7 geöffnet, so dass durch das Strukturteil 5 der von dem Lautsprecher 3 erzeugte Luftschall in Richtung des Innenraums des Kraftfahrzeugs geleitet wird. Durch das Strukturteil 5 ist also eine gezielte Schallführung möglich. Das vordere Strukturteil 6 ist dagegen einem Außenblech 8 der Tür 1 zugerichtet, wodurch ein zusätzliches Volumen, im vorliegenden Fall nämlich das sich zwischen der Struktur 2 und dem Außenblech 8 befindliche Volumen, innerhalb der Tür 1 an den Lautsprecher 3 gekoppelt wird. Es handelt sich also um eine offene Bauweise des Lautsprechers 3, der das Volumen der Tür 1 nutzt.

Die beiden über den Lautsprecher 3 miteinander verbundenen Strukturteile 5 und 6 trennen die Vorderseite der Membran 3a von der Rückseite desselben, so dass ein akustischer Kurzschluss verhindert wird. Des Weiteren trennen die beiden Strukturteile 5 und 6 gemeinsam mit der Struktur 2 einen sich zwischen der Struktur 2 und dem Außenblech 8 befindlichen Nassbereich von einem sich zwischen der Struktur 2 und der Türverkleidung 7 befindlichen Trockenbereich, wodurch die Dichtigkeit der Tür 1 gewährleistet wird. Der von dem Lautsprecher 3 erzeugte Körperschall wird über die beiden Strukturteile 5 und 6 in die Struktur 2 eingeleitet.

Wie in Fig. 2 zu erkennen ist, sind die beiden Strukturteile 5 und 6 im Querschnitt jeweils als ungefähre Viertelkreise ausgebildet, zwischen denen der Lautsprecher 3 montiert ist. Zusätzlich ist auf der Innenseite der beiden Strukturteile 5 und 6, also auf der dem Lautsprecher 3 zugerichteten Seite derselben, jeweils ein Absorptionsmaterial 9 vorgesehen, das so eingestellt werden kann, dass eine gezielte Schallabsorption möglich ist.

Die beiden beispielsweise aus Kunststoff bestehenden Strukturteile 5 und 6 können in einem sehr einfachen Spritzgießwerkzeug hergestellt werden. Insbesondere ist es möglich, die Strukturteile 5 und 6 einteilig miteinander auszuführen. Die Verbindung der Strukturteile 5 und 6 mit der Struktur 2 kann mit an sich bekannten Verbindungsverfahren erfolgen. Der Lautsprecher 3 kann in die beiden Strukturteile 5 und 6 vormontiert werden, so dass eine Kombination der beiden Strukturteile 5 und 6 mit dem Lautsprecher 3 in die Struktur 2 eingebaut werden kann, was eine einfache Montage ermöglicht.

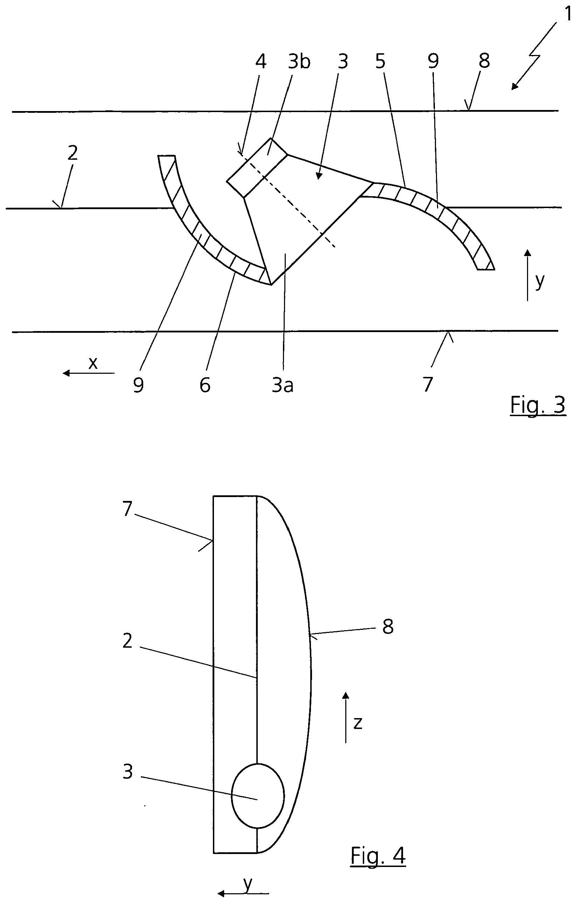

In Fig. 3 ist eine alternative Ausführungsform zu dem Lautsprechersystem gemäß Fig. 2 dargestellt. Dabei weist die Längsachse 4 des Lautsprechers 3 einen Winkel von ca. 45° zu der Ebene auf, in der sich die Struktur 2 erstreckt. Zwar werden auf diese Weise höhere Kräfte in die Struktur 2 eingeleitet, gegenüber der üblichen Bauform sind diese Kräfte jedoch erheblich geringer, wodurch eine geringere Aufschwingung der Struktur 2 erreicht wird. Der Vorteil einer solchen Anordnung der Lautsprecher 3 unter einem von 0° verschiedenen Winkel besteht in der geringeren Bauttiefe, die bei bestimmten Ausführungsformen der Tür 1 erforderlich sein kann. Der Winkel, in dem die Längsachse 4 gegenüber der Ebene, in der sich die Struktur 2 erstreckt, verläuft, ist also ein Kompromiss zwischen einer geringen Schwingungsanregung der Struktur 2 und einer geringen Bautiefe. Daher kann der Winkel, unter dem die Längsachse 4 zu der Ebene, in der sich die Struktur 2 erstreckt, verläuft, zwischen 0 und 45° betragen. Durch die in den Figuren 2 und 3 dargestellte Einbausituation des Lautsprechers 3 ist es außerdem möglich, einen größeren Magneten 3b als üblich zu verbauen.
Fig. 4 zeigt in einer Schnittansicht die Anordnung des Lautsprechers 3 innerhalb der Tür 1, d. h. zwischen dem Außenblech 8 und der Türverkleidung 7. Um die Bautiefe des Lautsprechersystems zu verringern, ist die Membran 3a des Lautsprechers 3 im dargestellten Ausführungsbeispiel oval bzw. ellipsenförmig ausgeführt. Prinzipiell sind jedoch auch rechteckige, runde oder andere Formen der Membran 3a möglich. Des Weiteren können auch Bändchenlautsprecher oder Exciter-Driver bzw. Exciter-Treiber zum Einsatz kommen.

Die Türverkleidung 7 kann eine nicht dargestellte Ablagetasche aufweisen, in der beispielsweise Getränkeflaschen untergebracht werden können. In diesem Fall können die beiden Strukturteile 5 und 6, vorzugsweise das hintere Strukturteil 5, der Form dieser Aufnahmetasche angepasst sein.

In den Figuren ist lediglich eine Tür 1 des Kraftfahrzeugs dargestellt, vorzugsweise befinden sich jedoch auf beiden Seiten des Kraftfahrzeugs jeweilige Türen mit entsprechenden Strukturen 2, in denen jeweils wenigstens ein Lautsprecher 3 angebracht ist. Hierbei können die Strukturteile 5 und gegebenenfalls 6 auf beiden Seiten im Wesentlichen identisch ausgeführt sein und beispielsweise spiegelverkehrt verbaut werden. Durch diese identische Ausführung kann für beide Seiten ein und dasselbe Werkzeug verwendet werden und es ist lediglich ein spiegelbildlicher Einbau erforderlich.

## Patentansprüche

1. Lautsprechersystem für ein Kraftfahrzeug mit wenigstens einem Lautsprecher (3) und mit einer durch ein Zwischenblech einer Tür des Kraftfahrzeugs gebildeten Struktur (2), an welcher der Lautsprecher (3) angebracht ist, wobei der wenigstens eine Lautsprecher (3) derart an der Struktur (2) angebracht ist, dass eine Längsachse (4) des wenigstens einen Lautsprechers (3) unter einem Winkel zwischen 0° und 45° zu einer Ebene verläuft, in der sich die Struktur (2) erstreckt, und wobei der wenigstens eine Lautsprecher (3) zwischen zwei schalenartige, mit der Struktur (2) unmittelbar verbundene, Strukturteile (5,6) eingebaut ist,
**dadurch gekennzeichnet, dass**
die Strukturteile (5) gekrümmt ausgebildet sind, und dass auf der dem Lautsprecher (3) zugerichteten Seite der Strukturteile (5,6) jeweils ein Absorptionsmaterial (9) vorgesehen ist, das so einstellbar ist, dass eine gezielte Schallabsorption möglich ist.

2. Lautsprechersystem nach Anspruch 1,
**dadurch gekennzeichnet, dass**
die Längsachse (4) des wenigstens einen Lautsprechers (3) im Wesentlichen parallel zu der Ebene verläuft, in der sich die Struktur (2) erstreckt.

3. Lautsprechersystem nach Anspruch 2,
**dadurch gekennzeichnet, dass**
die beiden Strukturteile (5,6) im Querschnitt wenigstens annähernd als Viertelkreise ausgebildet sind.

4. Lautsprechersystem nach einem der Ansprüche 1 bis 3,
**dadurch gekennzeichnet, dass**
der wenigstens eine Lautsprecher (3) an einer Position in der Struktur (2) eingebaut ist, an welcher die Struktur (2) eine hohe Steifigkeit aufweist.

5. Lautsprechersystem nach einem der Ansprüche 1 bis 4,
**dadurch gekennzeichnet, dass**
der Lautsprecher (3) eine ovale, ellipsenförmige, runde, oder rechteckige Membran (3a) aufweist.

6. Kraftfahrzeug mit einem Lautsprechersystem nach einem der Ansprüche 1 bis 5.

7. Kraftfahrzeug nach Anspruch 6,
**dadurch gekennzeichnet, dass**
an zwei sich auf unterschiedlichen Seiten des Kraftfahrzeugs befindlichen Strukturen (2) jeweils wenigstens ein Lautsprecher (3) angebracht ist, wobei die Strukturteile (5,6) auf beiden Seiten im Wesentlichen identisch ausgeführt sind.

## Claims

1. Loudspeaker system for a motor vehicle having at least one loudspeaker (3) and having a structure (2) formed by an intermediate metal sheet of a door of the vehicle to which the loudspeaker (3) is attached, wherein the at least one loudspeaker (3) is attached to the structure (2) such that a longitudinal axis (4) of the at least one loudspeaker (3) runs at an angle of between 0° and 45° to a plane in which the structure (2) extends, and wherein the at least one loudspeaker (3) is installed between two shell-like structural parts (5, 6) connected directly to the structure (2), **characterised in that** the structural parts (5) are curved and **in that** an absorption material (9) is provided on each of the sides of the structural parts (5, 6) facing towards the loudspeaker (3), which is adjustable such that targeted noise absorption is possible.

2. Loudspeaker system according to claim 1, **characterised in that** the longitudinal axis (4) of the at least one loudspeaker (3) runs substantially parallel to the plane in which the structure (2) extends.

3. Loudspeaker system according to claim 2, **characterised in that** the two structural parts (5, 6) are formed at least approximately as a quarter circle in cross-section.

4. Loudspeaker system according to one of claims 1 to 3, **characterised in that** the at least one loudspeaker (3) is built into the structure (2) at a position at which the structure (2) has a high stiffness.

5. Loudspeaker system according to one of claims 1 to 4, **characterised in that** the loudspeaker (3) comprises an oval, elliptic, round or rectangular membrane (3a).

6. Motor vehicle having a loudspeaker system according to one of claims 1 to 5.

7. Motor vehicle according to claim 6, **characterised in that** at least one loudspeaker (3) is respectively attached to two structures (2) located at different sides of the motor vehicle, wherein the structural parts (5, 6) are designed substantially identically on both sides.

## Revendications

1. Système de haut-parleur pour un véhicule automobile avec au moins un haut-parleur (3) et avec une structure (2), qui est formée par une tôle intermédiaire d'une porte du véhicule automobile et au niveau de laquelle le haut-parleur (3) est agencé, l'au moins un haut-parleur (3) étant agencé au niveau de la structure (2) de telle manière qu'un axe longitudinal (4) de l'au moins un haut-parleur (3) s'étend selon un angle compris entre 0° et 45° par rapport à un plan, dans lequel s'étend la structure (2), et l'au moins un haut-parleur (3) étant monté entre deux pièces de structure (5, 6) de type coque, assemblées directement à la structure (2),
**caractérisé en ce que**
les pièces de structure (5) sont réalisées de manière courbée, et **en ce qu'**est prévu, sur le côté des pièces de structure (5, 6) dirigé vers le haut-parleur (3), respectivement un matériau absorbant (9), qui est réglable de telle sorte qu'une absorption acoustique ciblée est possible.

2. Système de haut-parleur selon la revendication 1,
**caractérisé en ce que**
l'axe longitudinal (4) de l'au moins un haut-parleur (3) s'étend sensiblement parallèlement au plan, dans lequel s'étend la structure (2).

3. Système de haut-parleur selon la revendication 2,
**caractérisé en ce que**
les deux pièces de structure (5, 6) sont réalisées, dans la section transversale, au moins approximativement sous la forme de quarts de cercle.

4. Système de haut-parleur selon l'une quelconque des revendications 1 à 3,
**caractérisé en ce que**
l'au moins un haut-parleur (3) est monté dans la structure (2) à un endroit, où la structure (2) présente une rigidité élevée.

5. Système de haut-parleur selon l'une quelconque des revendications 1 à 4,
**caractérisé en ce que**
le haut-parleur (3) présente une membrane (3a) ovale, elliptique, ronde ou rectangulaire.

6. Véhicule automobile avec un système de haut-parleur selon l'une quelconque des revendications 1 à 5.

7. Véhicule automobile selon la revendication 6,
**caractérisé en ce que**
respectivement au moins un haut-parleur (3) est agencé au niveau de deux structures (2) situées sur des côtés différents du véhicule automobile, les pièces de structure (5, 6) étant configurées de manière sensiblement identique des deux côtés.
